# EUROPÄISCHE PATENTSCHRIFT

(11) **EP 3 617 601 B1**
(45) Veröffentlichungstag und Bekanntmachung des Hinweises auf die Patenterteilung: **08.03.2023**
(21) Anmeldenummer: 19193665.7
(22) Anmeldetag: 27.08.2019
(51) Int. Cl.: F24D 17/00, F24D 17/02, F24D 3/08, F24D 3/18, F24D 19/10

(54) **WARMWASSERSYSTEM, INSBESONDERE TRINKWASSERERWÄRMUNGS- UND TRINKWASSERLEITUNGSANLAGEN**
HOT WATER SYSTEM, ESPECIALLY DRINKING WATER HEATING AND DRINKING WATER LINE INSTALLATIONS
SYSTÈME D'EAU CHAUDE, EN PARTICULIER INSTALLATION DE CHAUFFAGE D'EAU POTABLE ET DE CONDUITES D'EAU POTABLE

(30) Priorität: 29.08.2018 DE 102018121053
(43) Veröffentlichungstag der Anmeldung: 04.03.2020
(73) Patentinhaber: Stiebel Eltron GmbH & Co. KG, 37603 Holzminden (DE)
(72) Erfinder: Röder, Frank, 37671 Höxter (DE); Schiefelbein, Kai, 37671 Höxter (DE)

(56) Entgegenhaltungen:
- DE-A1- 19 503 741
- DE-A1-102008 020 637
- DE-A1-102013 112 952
- DE-U1- 29 622 276

## Beschreibung

Die vorliegende Erfindung betrifft ein Warmwassersystem zur Bereitstellung von Warmwasser an wenigstens einer Zapfstelle. Die vorliegende Erfindung betrifft insbesondere Trinkwassererwärmungs- und Trinkwasserleitungsanlagen, wobei die Erfindung auch in anderen Gebieten der Anwendung umsetzbar sind.

Es ist bekannt, dass es im Bereich von Trinkwassererwärmungs- und Trinkwasserleitungsanlagen zu Legionellenwachstum kommen kann. Aus diesem Grund werden im Stand der Technik bereits viele Verfahren eingesetzt, die das Wachstum der Legionellen verhindern oder zumindest reduzieren.

Bei Trinkwassererwärmungs- und Trinkwasserleitungsanlagen wird allgemein zwischen Kleinanlagen und Großanlagen unterschieden, die jeweils unterschiedliche Anforderungen und Schwierigkeiten zur Verminderung des Legionellenwachstums stellen.

Als Kleinanlagen werden alle Anlagen mit Speichertrinkwassererwärmern oder zentralen Durchflusstrinkwassererwärmern im Ein- / oder Zweifamilienhaus unabhängig vom Inhalt des Trinkwassererwärmers und dem Rohrleitungsinhalt sowie alle Anlagen mit einem Inhalt kleiner gleich 400 Litern und kleiner gleich 3 Litern Inhalt in jeder Rohrleitung vom Trinkwassererwärmer bis zur entferntesten Zapfstelle, wobei Zirkluationsleitungen unberücksichtigt bleiben, bezeichnet.

Als Großanlagen werden alle Anlagen mit Speicher-Trinkwassererwärmern mit mindestens 400 Litern Inhalt und / oder mit einem Rohrleitungsinhalt von mindestens 3 Litern vom Austritt des Trinkwarmwasserbereiters bis zur entferntesten Zapfstelle bezeichnet. Großanlagen finden sich beispielsweise in Mehrfamilienhäusern, Sport- und Industrieanlagen, Hotels oder Altenheimen.

Bei Kleinanlagen werden zur Verminderung des Legionellenwachstums die Anforderungen gestellt, dass ein zentraler Speicherwassererwärmer oder zentralen Durchflusstrinkwassererwärmer eine Austrittstemperatur von 60 °C einhalten können muss. Dies schließt nicht auf die empfohlenen Betriebstemperaturen, sondern gibt Vorgaben für Planung und Errichtung der Anlagen. Stichleitungen mit einem Inhalt größer 3 Liter sind mit einer Zirkulation auszustatten, damit keine größeren Mengen Wasser in dem Rohrleitungsnetz stehen. In der Zirkulationsleitung ist ein maximaler Temperaturabfall von 5 K zulässig.

Bei Großanlagen werden zur Verminderung des Legionellenwachstums die Anforderungen gestellt, dass das Wasser am Austritt des Trinkwassererwärmers stets größer oder gleich 60°C sein muss. Der gesamte Speicherinhalt, einschließlich aller Vorwärmstufen ist mindestens einmal pro Tag auf mindestens 60 °C zu erwärmen. Stichleitungen mit einem Inhalt größer 3 Liter sind mit einer Zirkulation auszustatten. In der Zirkulationsleitung ist ein maximaler Temperaturabfall von 5 K zulässig.

Für folgende beispielhaften Leitungsquerschnitte ist der maximale Inhalt von 3 Litern bei den folgenden Längen erreicht: ø 15 mm = 20 m; ø 18 mm = 15 m; ø 22 mm = 9 m. Besonders für große Leitungsquerschnitte ist demnach das Volumen von 3 Litern bereits nach kurzer Leitungsstrecke erreicht.

Technische Regeln und Maßnahmen für Trinkwasser-Installationen sind beispielsweise der DIN 1988 Teil 200 sowie dem Arbeitsblatt W551 des Deutschen Vereins des Gas- und Wasserfaches (DVGW) zu entnehmen.

Die Beladung von traditionellen zentralen Speicher-Trinkwassererwärmern erfolgt in der Regel über einen innenliegenden Wärmeübertrager oder ein Speicherladesystem. Um eine Trinkwassertemperatur von 60°C zu erreichen muss der Wärmeerzeuger eine Beladetemperatur von UM 70°C bereitstellen.

Aus DE 10 2008 020 637 A1 ist bekannt, bei einer Warmwasserversorgungsanlage mit einer Zirkulationsleitung zur Bereitstellung von Warmwasser mit einer Wärmepumpe nur das umlaufende Warmwasser auf eine Temperatur von wenigstens 60°C anzuheben, um Bakterien abzutöten, insbesondere Legionellen. Das Warmwasser wird vorher von einem Wärmeerzeuger in einem Warmwasserspeicher erwärmt und bei einer vorgegebenen Temperatur bereitgestellt.

Vor diesem Hintergrund war es eine Aufgabe der vorliegenden Erfindung, ein effizientes Warmwassersystem, insbesondere Trinkwassererwärmungs- und/oder Trinkwasserleitungsanlage, bereitzustellen. Es war insbesondere eine Aufgabe der vorliegenden Erfindung, die Wärmeverluste, insbesondere Wärmeverluste durch notwendige Zirkulation, bei Trinkwassererwärmungs- und Trinkwasserleitungsanlagen zu reduzieren. Weiterhin soll der Anteil oder Deckungsgrad an der Wärmeerzeugung mittels der Wärmepumpe optimiert werden.

Erfindungsgemäß wird die Aufgabe durch ein Warmwassersystem gemäß Anspruch 1 und durch eine Trinkwassererwärmungs- und/oder Trinkwasserleitungsanlage gemäß Anspruch 8 gelöst. Bevorzugte Ausführungen werden in den Unteransprüchen beschrieben.

Demnach wird die Aufgabe durch ein Warmwassersystem zur Bereitstellung von Warmwasser an wenigstens einer Zapfstelle gelöst. Das Warmwassersystem weist einen ersten Speicherbehälter und eine Wärmepumpe auf. Der erste Speicherbehälter weist einen Kaltwasserzulauf, einen Warmwasserauslauf und für das Warmwasser sowie einen Zulauf und einen Rücklauf als Teil eines Heizvolumenstromes der Wärmepumpe auf. Der erste Speicherbehälter ist zur hydraulischen Entkopplung der Volumenströme von Wärmepumpe und Warmwasser und zu einer Wärmeübertragung von Wärmeenergie auf das Trinkwasser ausgebildet. Das Warmwassersystem weist wenigstens abschnittsweise parallel zu einer Rohrleitung zwischen Warmwasserauslauf und Zapfstelle eine Zirkulationsleitung auf, die dazu ausgebildet ist, das Wasser in der Rohrleitung zu zirkulieren. Die Zirkulationsleitung weist eine Pumpeinrichtung zum Zirkulieren des Warmwassers und eine Heizeinrichtung zum Erwärmen des Warmwassers auf, die dazu ausgebildet sind, das Wasser in der Rohrleitung auf einen vorbestimmten Wert zu erwärmen.

Gemäß einem vorteilhaften Ausführungsbeispiel fließ das Trinkwasser durch einen Kaltwasserzulauf in einen im ersten Speicherbehälters angeordneten Trinkwasserwärmeübertrager. Beim Durchfließen des Trinkwasserwärmeübertragers erwärmt sich das Wasser und tritt am Warmwasserauslauf aus dem ersten Speicherbehälter erwärmt aus. Es ist getrennt vom Heizungswasser, welches durch einen Vorlauf in den ersten Speicherbehälter und durch einen Rücklauf aus dem ersten Speicherbehälter strömt.

Vorteilhaft kann der Trinkwasserwärmeübertrager auch am ersten Speicherbehälter anliegen, außen und/oder innen, so dass eine Wärmeübertragung vom Heizungswasser zumindest teilweise durch eine Wand des ersten Speicherbehälters auf das Trinkwasser erfolgt.

Nach einem anderen vorteilhaften Gedanken der Erfindung fließ der Heizvolumenstrom durch einen Heizungswärmeübertrager des ersten Speicherbehälters, der im oder außen am ersten Speicherbehälter angeordnet ist. Bei dieser Lösung befindet sich das Trinkwasser im ersten Speicherbehälter.

Dadurch, dass der erste Speicherbehälter das Trinkwasser bei einer Trinkwasserzapfung erwärmt, das vorgehaltene Trinkwasservolumen im ersten Speicherbehälter sehr klein ist und die Zirkulationsleitung parallel zu der Rohrleitung zwischen Warmwasserauslauf und Zapfstelle verläuft, ist es nicht notwendig, das gesamte Wasser durch den ersten Speicherbehälter zu zirkulieren, wobei das zu zirkulierende Wasser eine bestimmte Mindesttemperatur, insbesondere zur Verringerung des Legionellenwachstums, aufweist. Insbesondere würde dadurch, dass das Wasser durch den ersten Speicherbehälter zirkuliert, auch das darin befindliche Speichervolumen gezwungenermaßen erwärmt, was den Deckungsgrad der Wärmepumpe am Trinkwasserwärmebedarf mindert. Die Zirkulationsverluste würden ebenfalls nicht verbessert.

Bei dem Warmwassersystem kann es sich sowohl um eine Großanlage als auch um eine Kleinanlage handeln. Insbesondere für Großanlagen eignet sich die vorliegende Erfindung besonders, da bei diesen die Volumina der Rohrleitung zwischen Warmwasserauslauf und Zapfstelle besonders groß sind.

Wenn insbesondere sichergestellt werden kann, dass ein Wassertausch für warmes Trinkwasser, das heißt Warmwasser, innerhalb von drei Tagen durchgeführt wird, können Betriebstemperaturen vorteilhaft auf bis zu 50 °C herabgesenkt werden. Auch dies spart erfindungsgemäß Energie und erhöht die Effizienz des Warmwassersystems.

In einer Ausführung beträgt ein Leitungsvolumen der Rohrleitung zwischen Warmwasserauslauf des ersten Speicherbehälters und Zapfstelle mehr als 3 Liter. In diesem Fall sind gemäß den anzuwendenden Normen Zirkulationen vorzusehen. Erfindungsgemäß erfolgt durch die geschickte Positionierung der Zirkulationsleitung mit Pumpeinrichtung und Heizeinrichtung eine Reduzierung des notwendigerweise bei der Zirkulation zu erwärmenden Wassers. Damit wird der Vorteil des erfindungsgemäßen Warmwassersystems in Rohrleitungen gemäß dieser Ausführung besonders deutlich.

Der erste Speicherbehälter weist einen Wärmetauscher auf und ist als Durchflusserwärmer ausgestaltet. Dadurch, dass das Warmwasser beim Durchfließen des ersten Speicherbehälters mittels des Wärmetauschers erwärmt wird, wird das Gesamtvolumen des in dem System gespeicherten Warmwassers weiter verringert. Durch den geringen Wasserinhalt ist das System hygienisch attraktiv.

Die Heizeinrichtung der Zirkulationsleitung weist einen elektrischen Wandspeicher auf. Wandspeicher sind verbreitete Einrichtungen zur Bereitstellung von erwärmtem Wasser und weit verbreitet erhältlich. Damit wird die Komplexität des Warmwassersystems nicht unnötig erhöht. Die Kombination aus erstem Speicherbehälter und Wandspeicher ermöglicht einen hohen Anteil der Wärmepumpe an der Erwärmung des Warmwassers.

In einer Ausführung weist die Zirkulationsleitung vor bzw. nach dem Wandspeicher ein Sicherheitsventil und/oder ein Absperrventil auf.

In einer Ausführung weist der Wandspeicher einen Temperaturregler auf, mit dem der Wandspeicher auf eine Speichertemperatur von mindestens 60°C einstellbar ist. Damit können die zur Normenkonformität nötigen Temperaturen zur Legionellenbekämpfung bei der Zirkulation erreicht werden.

In einer Ausführung ist der elektrische Wandspeicher mit einem Volumen von 30 Litern bis 150 Litern ausgestaltet.

In einer Ausführung ist die Zirkulationsleitung dazu eingerichtet, die Wassertemperatur des Warmwassers am Warmwasserauslauf des ersten Speicherbehälters auf mindestens 55 °C zu erwärmen. Vorteilhaft kann damit durch die Erfindung sichergestellt werden, dass die Zirkulationsleitung an jeder Stelle mindestens eine Temperatur von 55 °C erreicht.

In einer Ausführung ist der erste Speicherbehälter ausgebildet, auf einer maximalen Temperatur im Inneren von nicht mehr als 55 °C, insbesondere unter 50 °C und besonders bevorzugt im Bereich von 45 °C, gehalten zu werden. Dadurch, dass der erste Speicherbehälter nicht insgesamt auf beispielsweise über 60 °C erhitzt werden muss, ist ein besonders effizienter Betrieb der Wärmepumpe möglich.

In einer Ausführung weist das Warmwassersystem ferner eine Steuerung auf, die dazu eingerichtet ist, die Zirkulation der Rohrleitung zwischen Warmwasserauslauf des ersten Speicherbehälters und Zapfstelle insbesondere zu vorbestimmten Zeiten, insbesondere periodisch, auszuführen. Durch die Steuerung ist insbesondere eine benötigte regelmäßige bzw. wiederkehrende Zirkulation durch die Zirkulationsleitung möglich.

Vorzugsweise ist die Steuerung ferner dazu eingerichtet, bei einem Zapfen aus der Zapfstelle die Zirkulation durch die Zirkulationsleitung zu beenden. Dadurch kann eine Verringerung des Wasserdruckes an der Zapfstelle, beispielsweise bei einem Duschvorgang, verhindert werden.

Die Aufgabe wird erfindungsgemäß ferner durch eine Trinkwassererwärmungs- und/oder Trinkwasserleitungsanlage, die ein Warmwassersystem nach einem der vorstehenden Ansprüche umfasst, gelöst.

Weitere Vorteile und Ausführungen werden nachfolgend mit Verweis auf die beigefügte Figur beschrieben. Hierbei zeigt:

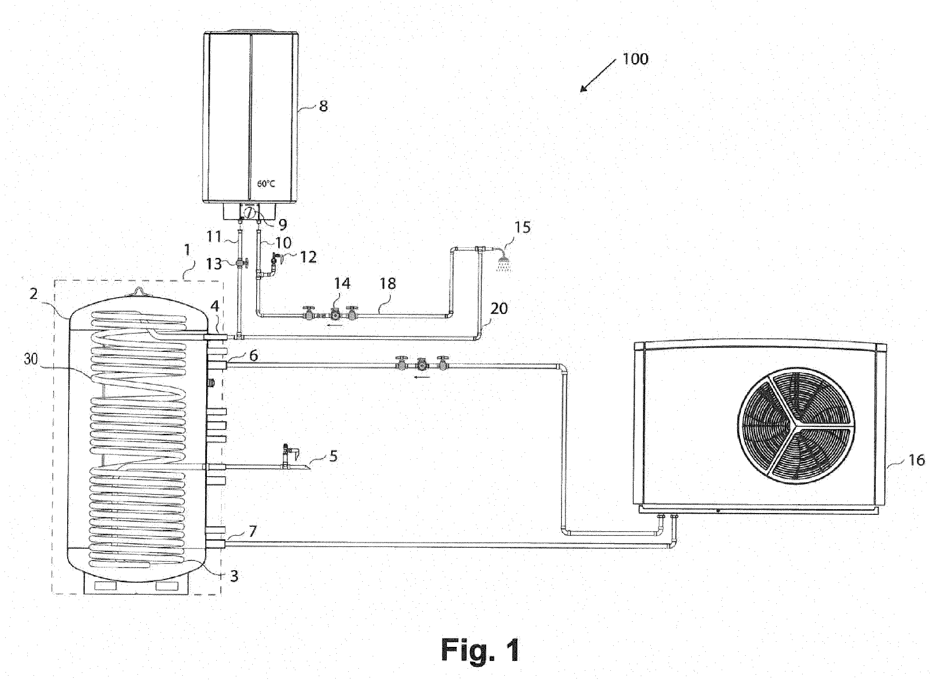

Fig. 1 schematisch und exemplarisch ein erfindungsgemäßes Warmwassersystem.

Fig. 1 zeigt schematisch und exemplarisch ein erfindungsgemäßes Warmwassersystem 100. Das Warmwassersystem 100 ist insbesondere dazu ausgelegt, an einer Zapfstelle 15 Warmwasser, insbesondere Trinkwarmwasser, bereitzustellen. Schematisch ist eine einzige Zapfstelle 15 gezeigt, in der Praxis können auch mehrere, insbesondere viele, Zapfstellen 15 Teil des Warmwassersystems 100 sein.

Das an der Zapfstelle 15 bereitstellte Warmwasser entstammt dem Kaltwasserzulauf 5 und wird durch das Warmwassersystem 100 erwärmt. In diesem Beispiel sorgt eine Wärmepumpe 16 dafür, dass Wasser in einem ersten Speicherbehälter 2 erwärmt wird. Der Speicherinhalt des ersten Speicherbehälters 2 ist mit der Größe des Warmwassersystems 100 skalierbar. Die Wärmepumpe 16 bringt über einen Vorlauf 6 warmes Wasser eines Heizungskreises in den Speicherbehälter des ersten Speicherbehälters 2 ein. Zurück zu der Wärmepumpe 16 strömt dieses Heizungswasser aus einem Rücklauf 7 am unteren Ende bzw. im unteren Bereich des ersten Speicherbehälters 2. Demnach wird sich in dem ersten Speicherbehälter 2 ein Temperaturgradient einstellen, wobei die höhere Wassertemperatur an dem oberen Ende des Speichers erreicht ist. In dem Beispiel ist um den ersten Speicherbehälter 2 herum eine Wärmedämmung 1 mit gestrichelten Linien gezeigt. Die Temperatur des Heizungswassers in dem ersten Speicherbehälter 2 ist beispielsweise an dem oberen Ende, das heißt der maximalen Füllhöhe des ersten Speicherbehälters 2, im Bereich von zwischen etwa 55 bis 60 °C. Auch andere Temperaturen sind natürlich vorstellbar. Insbesondere eignen sich niedrigere Temperaturen, einen effizienteren Betrieb der Wärmepumpe 16 zu gewährleisten.

Das über den Kaltwasserzulauf 5 in das Innere des ersten Speicherbehälters 2 eintretende zu erwärmende Trinkwasser, im Folgenden Warmwasser genannt, verläuft durch ein Wärmeübertragerrohr 3 durch den ersten Speicherbehälter 2 hindurch und verlässt diesen an dem oberen Ende und aufgewärmt durch einen Warmwasserauslauf 4. In diesem Beispiel ist gezeigt, dass das Wärmeübertragerrohr 3, das insbesondere als Edelstahlrohr ausgebildet ist, zunächst zu einem tiefsten Punkt innerhalb des ersten Speicherbehälters verläuft und sich von dort spiralförmig bis zu einem höchsten Punkt ausdehnt. Damit wird die optimale Wärmeübertragung von dem in dem ersten Speicherbehälter 2 befindlichen Heizungswasser auf das zu erwärmende Warmwasser erreicht. Von dem Warmwasserauslass 4 zu der Zapfstelle 15 verläuft eine Rohrleitung 20. Insbesondere ist in dieser Ausführung ein Volumen des Leitungsinhaltes der Rohrleitung 20 größer als 3 Liter, was normgemäß bedeutet, dass regelmäßige Zirkulationen des in der Leitung befindlichen Wassers durchzuführen sind.

Zu diesem Zweck wird erfindungsgemäß über weite Bereiche der Rohrleitung 18 parallel eine Zirkulationsleitung 18 vorgesehen. Die Zirkulationsleitung 18 muss jedenfalls ausreichende Bereiche der Rohrleitung 20 zum Zirkulieren bringen, dass das verbleibende Volumen, das heißt das Volumen, das an dem Warmwasserauslauf 4 bzw. an der Zapfstelle 15 steht und nicht zirkuliert, vernachlässigbar klein ist, insbesondere kleiner als 3 Liter beträgt. Damit die Zirkulation zu einer gewünschten Erwärmung des Warmwassers, das sich in der Rohrleitung befindet, führt, ist eine Heizeinrichtung 8 in der Zirkulationsleitung 18 angeordnet. Die Heizeinrichtung 8 ist als elektrischer Warmwasserwandspeicher ausgebildet. Ein Vorlauf 10 der Heizeinrichtung 8 sowie ein Rücklauf 11 der Heizeinrichtung 8 sorgen für eine Anbindung der Heizeinrichtung 8 an die Zirkulationsleitung 18 und damit an die Rohrleitung 20.

Die Heizeinrichtung 8 weist ferner einen Temperaturregler 9 auf, mit dem die aus der Heizeinrichtung 8 in den Vorlauf 10 austretende Wassertemperatur einstellbar ist. Insbesondere kann eine Temperatur von wenigstens 60 °C eingestellt werden. In der Zirkulationsleitung 18 ist ferner eine Zirkulationspumpe 14 angeordnet, die entlang einer angezeigten Pfeilrichtung für eine Zirkulation durch die Zirkulationsleitung 18 und die Rohrleitung 20 sorgt. Schließlich ist ein Sicherheitsventil 12 und ein Absperrventil 13 vorgesehen, durch die ein unerwünschter Wasseraustritt bzw. Überdruck im System folgenlos bleibt bzw. gar nicht auftritt.

### Liste der Bezugszeichen:

- 1: Wärmedämmung des ersten Speicherbehälters
- 2: erster Speicherbehälter
- 3: Wärmeübertragerrohr
- 4: Warmwasserauslauf
- 5: Kaltwasserzulauf
- 6: Vorlauf
- 7: Rücklauf
- 8: Heizeinrichtung
- 9: Temperaturregler
- 10: Vorlauf Heizeinrichtung
- 11: Rücklauf Heizeinrichtung
- 12: Sicherheitsventil
- 13: Absperrventil
- 14: Zirkulationspumpe
- 15: Zapfstelle
- 16: Wärmepumpe
- 18: Zirkulationsleitung
- 20: Rohrleitung
- 30: Trinkwasserwärmeübertrager
- 100: Warmwassersystem

## Patentansprüche

1. Warmwassersystem (100) zur Bereitstellung von Warmwasser an wenigstens einer Zapfstelle (15), wobei das Warmwassersystem (100) einen ersten Speicherbehälter (2) und eine Wärmepumpe (16) aufweist,
wobei der erste Speicherbehälter (2) einen Kaltwasserzulauf (5) und einen Warmwasserauslauf (4) für das Warmwasser sowie einen Vorlauf (6) und einen Rücklauf (7) als Teil eines Heizvolumenstromes der Wärmepumpe (16) aufweist,
wobei der erste Speicherbehälter (2) zur hydraulischen Entkopplung der Volumenströme von Wärmepumpe (16) und Warmwasser ausgebildet ist, wobei der erste Speicherbehälter (2) einen Wärmetauscher aufweist,
wobei das Warmwassersystem (100) wenigstens abschnittsweise parallel zu einer Rohrleitung (20) zwischen Warmwasserauslauf (4) und Zapfstelle (15) eine Zirkulationsleitung (18) aufweist, die dazu ausgebildet ist, das Wasser in der Rohrleitung (20) zu zirkulieren,
wobei die Zirkulationsleitung (18) eine Pumpeinrichtung zum Zirkulieren des Warmwassers und eine Heizeinrichtung (8) zum Erwärmen des Warmwassers aufweist, die dazu ausgebildet sind, das Wasser in der Rohrleitung (20) auf einen vorbestimmten Wert zu erwärmen, **dadurch gekennzeichnet, dass** der erste Speicherbehälter (2) als Durchflusserwärmer für das Warmwasser ausgestaltet ist, und dass die Heizeinrichtung (8) der Zirkulationsleitung (18) einen elektrischen Wandspeicher aufweist.

2. Warmwassersystem (100) nach Anspruch 1, wobei ein Leitungsvolumen der Rohrleitung (20) zwischen Warmwasserauslauf (4) des ersten Speicherbehälters (2) und Zapfstelle (15) mehr als 3 Liter beträgt.

3. Warmwassersystem (100) nach Anspruch 1, wobei der elektrische Wandspeicher einen Temperaturregler (9) aufweist, mit dem der elektrische Wandspeicher auf eine Speichertemperatur von mindestens 60 °C einstellbar ist.

4. Warmwassersystem (100) nach einem der Ansprüche 1 oder 2, wobei der elektrische Wandspeicher mit einem Volumen von 30 Litern bis 150 Litern ausgestaltet ist.

5. Warmwassersystem (100) nach einem der vorstehenden Ansprüche, wobei die Zirkulationsleitung (18) dazu eingerichtet ist, die Wassertemperatur des Warmwassers am Warmwasserauslauf (4) des ersten Speicherbehälters (2) auf mindestens 55 °C zu erwärmen.

6. Warmwassersystem (100) nach einem der vorstehenden Ansprüche, wobei der erste Speicherbehälter (2) ausgebildet ist, auf einer maximalen Temperatur im Inneren von nicht mehr als 55 °C, gehalten zu werden.

7. Warmwassersystem (100) nach einem der vorstehenden Ansprüche, wobei am Kaltwasserzulauf (5) im ersten Speicherbehälter (2) ein Trinkwasserwärmeübertrager (30) angeschlossen ist, der dazu geeignet ist das Trinkwasser beim Durchfließen des Trinkwasserwärmeübertragers (30) zu erwärmen, wobei der Trinkwasserwärmeübertrager (30) weiterhin am Warmwasserauslauf (4) angeschlossen ist.

8. Trinkwassererwärmungs- und/oder Trinkwasserleitungsanlage, die ein Warmwassersystem (100) nach einem der vorstehenden Ansprüche umfasst.

## Claims

1. Hot water system (100) for the provision of hot water to at least one draw-off point (15), where the hot water system (100) comprises a first storage tank (2) and a heat pump (16),
where the first storage tank (2) comprises a cold water inlet (5) and a hot water outlet (4) for the hot water as well as a flow (6) and a return (7) as part of a heat volume flow of the heat pump (16),
where the first storage tank (2) is designed to hydraulically separate the volume flows between heat pump (16) and hot water, where the first storage tank (2) comprises a heat exchanger,
where the hot water system (100) comprises, at least in sections, parallel to a pipeline (20) between hot water outlet (4) and draw-off point (15), a DHW circulation line (18), which is designed to circulate the water in the pipeline (20),
where the DHW circulation line (18) comprises a pumping device to circulate the hot water and a heating device (8) to heat the hot water, which are designed to heat the water in the pipeline (20) to a pre-defined temperature, **characterised in that** the first storage tank (2) is designed as an instantaneous water heater for the hot water and that the heating device (8) of the DHW circulation line (18) comprises an electric wall mounted storage tank.

2. Hot water system (100) according to claim 1, where a pipeline volume of the pipeline (20) between the hot water outlet (4) of the first storage tank (2) and the draw-off point (15) is more than 3 litres.

3. Hot water system (100) according to claim 1, where the electric wall mounted storage tank comprises a temperature controller (9) that allows the electric wall mounted storage tank to be adjusted to a storage temperature of at least 60 °C.

4. Hot water system (100) according to either claim 1 or 2, where the electric wall mounted storage tank has a volume of between 30 and 150 litres.

5. Hot water system (100) according to one of the preceding claims, where the DHW circulation line (18) is designed to heat the water temperature of the hot water at the hot water outlet (4) of the first storage tank (2) to at least 55 °C.

6. Hot water system (100) according to one of the preceding claims, where the first storage tank (2) is designed to be maintained at a maximum inside temperature of no more than 55 °C.

7. Hot water system (100) according to one of the preceding claims, where the cold water inlet (5) in the first storage tank (2) is connected to a DHW indirect coil heat exchanger (30) that is suitable for heating the DHW as it flows through the DHW indirect coil heat exchanger (30), where the DHW indirect coil heat exchanger (30) continues to be connected to the hot water outlet (4).

8. DHW heating and/or DHW pipeline system comprising a hot water system (100) according to one of the preceding claims.

## Revendications

1. Système d'eau chaude (100) destiné à fournir de l'eau chaude sur au moins une prise d'eau (15), le système d'eau chaude (100) présentant un premier ballon de stockage (2) et une pompe à chaleur (16),
le premier ballon de stockage (2) présentant une arrivée d'eau froide (5) et une sortie d'eau chaude (4) pour l'eau chaude ainsi qu'un départ (6) et un retour (7) en tant que parties d'un débit volumique de chauffage de la pompe à chaleur (16),
le premier ballon de stockage (2) étant conçu pour la séparation hydraulique des débits volumiques de la pompe à chaleur (16) et de l'eau chaude, le premier ballon de stockage (2) présentant un échangeur de chaleur,
le système d'eau chaude (100) présentant une conduite de circulation (18) au moins en partie parallèle à une conduite (20) située entre la sortie d'eau chaude (4) et la prise d'eau (15), ladite conduite de circulation étant conçue pour faire circuler l'eau dans la conduite (20),
la conduite de circulation (18) présentant un dispositif de pompe pour la circulation de l'eau chaude et un dispositif de chauffage (8) pour le chauffage de l'eau chaude, lesquels sont conçus pour chauffer l'eau de la conduite (20) à une valeur prédéfinie, **caractérisé en ce que** le premier ballon de stockage (2) est réalisé sous la forme d'un chauffe-eau instantané pour l'eau chaude et **en ce que** le dispositif de chauffage (8) de la conduite de circulation (18) présente un chauffe-eau mural électrique.

2. Système d'eau chaude (100) selon la revendication 1, dans lequel un volume de la conduite (20) située entre la sortie d'eau chaude (4) du premier ballon de stockage (2) et la prise d'eau (15) est supérieur à 3 litres.

3. Système d'eau chaude (100) selon la revendication 1, dans lequel le chauffe-eau mural électrique présente un thermostat (9) au moyen duquel le chauffe-eau mural électrique peut être réglé à une température de stockage d'au moins 60 °C.

4. Système d'eau chaude (100) selon l'une des revendications 1 ou 2, dans lequel le chauffe-eau mural électrique est réalisé avec un volume de 30 litres à 150 litres.

5. Système d'eau chaude (100) selon l'une quelconque des revendications précédentes, dans lequel la conduite de circulation (18) est configurée pour chauffer la température de l'eau chaude au niveau de la sortie d'eau chaude (4) du premier ballon de stockage (2) à au moins 55 °C.

6. Système d'eau chaude (100) selon l'une quelconque des revendications précédentes, dans lequel l'intérieur du premier ballon de stockage (2) est conçu pour être maintenu à une température maximale ne dépassant pas 55 °C.

7. Système d'eau chaude (100) selon l'une quelconque des revendications précédentes, dans lequel un échangeur de chaleur pour eau potable (30) est raccordé à l'arrivée d'eau froide (5) dans le premier ballon de stockage (2), ledit échangeur de chaleur (30) étant apte à chauffer l'eau potable lors de sa circulation dans l'échangeur de chaleur pour eau potable (30) et étant en outre raccordé à la sortie d'eau chaude (4).

8. Installation de chauffage d'eau potable et/ou installation de conduites d'eau potable, comprenant un système d'eau chaude (100) selon l'une quelconque des revendications précédentes.
